Europäisches Patentamt

European Patent Office

Office européen des brevets

(19)

(11) Veröffentlichungsnummer : **0 013 377**
**B1**

(12) **EUROPÄISCHE PATENTSCHRIFT**

(45) Veröffentlichungstag der Patentschrift :
03.02.82

(21) Anmeldenummer : 79105160.0

(22) Anmeldetag : 13.12.79

(51) Int. Cl.³ : **F 16 K 17/196// B65D51/00**

(54) Ventil.

(30) Priorität : 21.12.78 DE 2855290

(43) Veröffentlichungstag der Anmeldung :
23.07.80 (Patentblatt 80/15)

(45) Bekanntmachung des Hinweises auf die Patenterteilung : 03.02.82 Patentblatt 82/05

(84) Benannte Vertragsstaaten :
AT BE DE FR GB IT SE

(56) Entgegenhaltungen :
DE - A - 2 525 708
FR - A - 1 071 208
FR - A - 2 224 682

(73) Patentinhaber : Blau KG Fabrik für Kraftfahrzeugteile
Schneiderstrasse 13-17 Postfach 2024
D-4018 Langenfeld (DE)

(72) Erfinder : Gerdes, Theodor
6, Tilman-Riemenschneider-weg
D-4018 Langenfeld (DE)

(74) Vertreter : Patentanwälte Schaumburg,
Schulz-Dörlam & Thoenes
Mauerkircherstrasse 31
D-8000 München 80 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 013 377 B1

Ventil

Die Erfindung bezieht sich auf ein Ventil mit einem in einer Trennwand vorgesehenen Ventilloch, einem auf einer Seite der Trennwand liegenden, das Ventilloch überdeckenden Ventilteller, einer am Ventilteller gehaltenen Dichtung, die mit einem das Ventilloch umgebenden Ventilsitz zusammenwirkt, einem mit dem Ventilteller beweglich verbundenen, sich durch das Ventilloch hindurch erstreckenden Stößel und einer zwischen die dem Ventilteller abgewandte Seite der Trennwand und einen am freien Ende des Stößels vorgesehenen Ring eingeschalteten Schraubendruckfeder, wobei der Stößel in einem innerhalb des Ventillochs liegenden Längenabschnitt eine Nabe sowie von dieser radial nach außen ragende, in Umfangsrichtung voneinander beabstandete und sich achsparallel zu dem Ring hin erstreckenden Rippen aufweist, die einstückig mit dem Ring und der Nabe hergestellt sind und innerhalb des Ventillochs gegenüber dessen Innendurchmesser geringere Außenabmessungen aufweisen und wobei zur Rastverbindung von Nabe und Ventilteller einer dieser Teile eine zentrale Ausnehmung von kreisförmigem Querschnitt aufweist und der andere dieser Teile eine sich in die Ausnehmung hinein erstreckende Stange, deren innerhalb der Ausnehmung liegender Abschnitt zylindrisch ist, und einen an einem Ende der Stange getragenen, auf seiner zur Stange hin liegenden Seite eine kreisförmige Anlagefläche aufweisenden Kopf umfaßt, dessen Durchmesser größer ist als derjenige der Ausnehmung in ihrem dem Kopf zugewandten Bereich.

Ein derartiges Ventil ist bekannt aus DE-A 25 25 708. Hierbei weist die Nabe des Stößels einen sich in den Ventilteller hinein erstreckenden Fortsatz auf, der an seinem in dem Ventilteller liegenden Ende den sich knopfartig erweiternden Kopf trägt, und letzterer ist in einem entsprechend geformten Hohlraum des Ventiltellers lose gehalten. Die Montage von Stößel und Ventilteller erfolgt, indem der genannte Kopf nach Art eines Druckknopfes in den Ventilteller eingedrückt wird und in dessen Hohlraum verrastet. Damit diese Montage möglich ist, muß der Ventilteller aus einem relativ elastischen Material bestehen. Hieraus ergibt sich der Nachteil, daß sich der Ventilteller bei geschlossenem Ventil unter der Wirkung der von der Schraubendruckfeder ausgeübten Kraft durchbiegt, daß diese Durchbiegung nur ungenau im voraus bestimmbar ist und sich im übrigen während der Gebrauchslebensdauer des Ventils durch Materialermüdung des Ventiltellers verändern kann, so daß der Federweg der Schraubendruckfeder je nach Durchbiegung des Ventiltellers unterschiedlich ist und daß sich hierdurch unterschiedliche Schließkräfte des Ventils ergeben.

Weiter kann bei dem bekannten Ventil eine seitliche Ausweichbewegung des Stößels, wie sie an sich zur Vermeidung eines Festklemmens durch Verschmutzungen im Ventilloch günstig ist, zu einem außermittigen Sitz des Ventiltellers und der Dichtung gegenüber dem Ventilsitz führen. Es ergibt sich dann eine geringe Schrägstellung des Ventiltellers auf dem Ventilsitz mit der Folge, daß die Dichtlinie nicht mehr eine Kreislinie ist, sondern entsprechend einer Ellipse verläuft. Dies hat zwei nachteilige Folgen. Erstens liegt der Ventilteller an seiner einen Seite weiter von der Trennwand entfernt, während sich seine gegenüberliegende Seite stärker der Trennwand nähert, jedoch kompensieren sich diese beiden Lageunterschiede nicht notwendig in bezug auf den Stößel, so daß sich eine veränderte Schließkraft ergeben kann. Zweitens wirkt dann auf den Ventilteller der Druck an einer der längeren Ellipsenhalbachse entsprechenden Stelle, die weiter von der Mitte des Ventiltellers entfernt ist als bei dessen genau mittigem Aufsitzen auf dem Ventilsitz, wodurch sich das Ventil bereits bei geringeren Druckunterschieden öffnet.

Eine weitere Beeinflussung der Schließkraft ergibt sich bei dem bekannten Ventil daraus, daß die Ausnehmung des Ventiltellers, in der der von der Stange getragene Kopf gehalten ist, eine vom Kopf hintergriffene, annähernd kugelzonenförmige Anlagefläche aufweist, an der der äußerste Rand des Kopfes im wesentlichen nur linienförmig aufliegt. Eine genau kugelzonenförmige Ausbildung der Auflagefläche ist in der Praxis jedoch äußerst schwierig, da der Hohlraum, in dem der Kopf des Stößels aufgenommen ist, nur schwierig zugänglich ist. Weiter führt die nur linienförmige Auflagerung des Kopfes dazu, daß sich der aufliegende, äußerste Rand des Kopfes und besonders die kugelzonenförmige Auflagefläche des Ventiltellers sehr leicht verformen. Diese Verformung tritt bereits wegen der Elastizität des Materials des Ventiltellers ein. Darüberhinaus entstehen aufgrund der Schwenkbewegung zwischen Stößel und Kopf einerseits und Ventilteller andererseits leicht bleibende Verformungen. Schließlich entstehen solche Verformungen auch aufgrund von Materialermüdung. Alle diese Verformungen führen dazu, daß Stößel und Kopf gegenüber dem Ventilteller in Richtung zur gegenüberliegenden Seite der Trennwand hin wandern, daß sich also die Schließkraft verringert.

Der Erfindung liegt die Aufgabe zugrunde, ein Ventil der eingangs genannten Art in baulich einfacher Weise derart weiterzubilden, daß der Druckunterschied zwischen den beiden Seiten der Trennwand, der zum Öffnen des Ventils führt, genauer bestimmbar ist und sich auch bei längerem Gebrauch des Ventils nicht ändert.

Die Aufgabe wird gemäß der Erfindung bei einem Ventil der eingangs genannten Art dadurch gelöst, daß der aus einem unelastischen Werkstoff bestehende Ventilteller die Stange trägt, daß die die Nabe durchdringende Ausnehmung einen dem Durchmesser des zylindrischen Abschnitts der Stange gleichen geringsten Durchmesser hat und sich von ihrem dem Ventilteller abgewandten Ende ausgehend zum Ventilteller hin konisch erweitert und daß die dem Ventilteller abgewandte Stirnseite der Nabe zur Anlage an der Anlagefläche des Kopfes eben ausgebildet ist.

Bei dem Ventil gemäß der Erfindung ist der zur Verbindung von Ventilteller und Stößel vorgesehene Kopf über eine Stange fest mit dem relativ starren Ventilteller verbunden, so daß zur Montage von Ventilteller und Stößel nur die Ausnehmung des letzteren entsprechend aufgeweitet wird, um den Kopf hinter der Nabe verrasten zu lassen, während bei montiertem und geschlossenem Ventil der Ventilteller praktisch nicht verformt wird und auch der Stößel trotz seiner erforderlichen Nachgiebigkeit zur Montage des Kopfes genügend fest ausgebildet sein kann, um einen stets gleichbleibenden Federweg der Schraubendruckfeder zu gewährleisten. Damit ergibt sich eine genau bestimmbare und nicht durch Materialermüdungen des Ventiltellers zu beeinträchtigende Schwelle des Druckunterschiedes zwischen den beiden Seiten der Trennwand, bei dem das Ventil öffnet. Weiter liegt bei dem Ventil gemäß der Erfindung der Schwenkpunkt des Ventiltellers gegenüber dem Stößel nicht innerhalb des Ventiltellers, sondern im Bereich der dem Ventilteller abgewandten Stirnseite der Nabe. Eine außermittige Stellung des Bereiches wirkt sich daher auf den Ventilteller wesentlich weniger aus. Vor allem aber ist eine außermittige Auslenkung dieses Bereiches im allgemeinen auch dann nicht erforderlich, wenn Schmutzteilchen zwischen die Rippen des Stößels und den Innenumfang des Ventilloches gelangen. In diesem Fall kann nämlich bei weiterhin mittig stehendem Ventilteller und mittig stehender Stange der Stößel um den Bereich der Anlagefläche des Kopfes an der Nabe herum in eine Schrägstellung verschwenkt werden, die von der sich konisch erweiternden Ausnehmung der Nabe zugelassen wird. Die eben ausgebildete Anlagefläche an der Nabe liegt bei nicht gegenseitig verschwenkter Stellung des Stößels einerseits und des Ventiltellers und der Stange andererseits an der entsprechenden Anlagefläche des Kopfes nicht nur linienförmig, sondern in einem Kreisringbereich flächig an, wodurch sich gegenüber einer nur linienförmigen Anlage geringere Verformungen ergeben, die die Schließkraft beeinträchtigen könnten. Bei einer verschwenkten gegenseitigen Lage von Stößel und Ventilteller wird andererseits eine gewisse Richtwirkung ausgeübt, die einerseits eine genaumittige Stellung des Ventiltellers fördert und andererseits eine Rückkehr des Stößels in seine axial ausgerichtete Stellung fördert, wenn die zuvor die Schrägstellung bewirkenden Schmutzteilchen wieder verschwunden sind.

Die Erfindung wird im folgenden anhand der Zeichnungen näher erläutert, in denen ein Ausführungsbeispiel eines Ventils dargestellt ist. Es zeigt :

Fig. 1 einen Längsschnitt durch das Ventil ;

Fig. 2 einen Querschnitt durch das Ventil entlang der Linie II-II in Fig. 1 ;

Fig. 3 eine Draufsicht auf das Ventil bei Blick in Fig. 1 von rechts her.

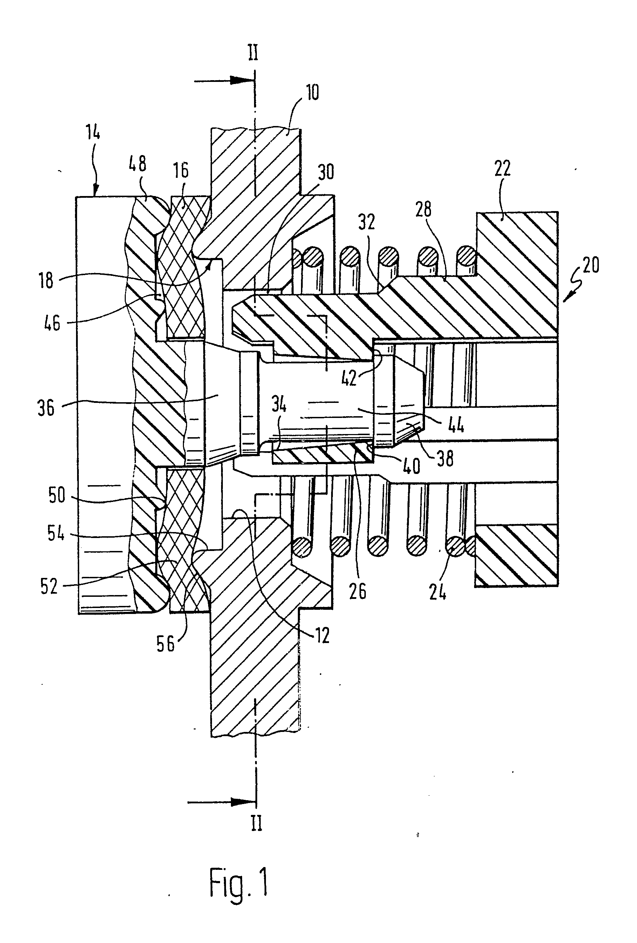

Das in den Figuren dargestellte Ventil dient beispielsweise in einem Verschlußdeckel für den Kraftstofftankstutzen eines Kraftfahrzeuges zur Entlüftung bei im Kraftstofftank auftretenden Überdrucken. Dabei weist der Verschlußdeckel in seinem Inneren eine abgedichtet gehaltene Trennwand 10 auf, die quer zu seiner Achse und zur Achse des Kraftstofftankstutzens verläuft und in der ein zylindrisches Ventilloch 12 vorgesehen ist. Auf der in Figur 1 linken, äußeren Seite der Trennwand 10 liegt ein das Ventilloch 12 überdeckender Ventilteller 14, an dessen der Trennwand 10 zugewandter Seite eine kreisringförmige Dichtung 16 von dem Ventilteller 14 annähernd gleichem Außendurchmesser gehalten ist. Diese beidseitig ebene Dichtung 16 wirkt bei geschlossenem Ventil zusammen mit einem an der Trennwand 10 vorgesehenen, das Ventilloch 12 in einem Abstand umgebenden Ventilsitz 18, um eine Abdichtung und auch in noch zu beschreibender Weise eine Zentrierung des Ventiltellers 14 zu bewirken.

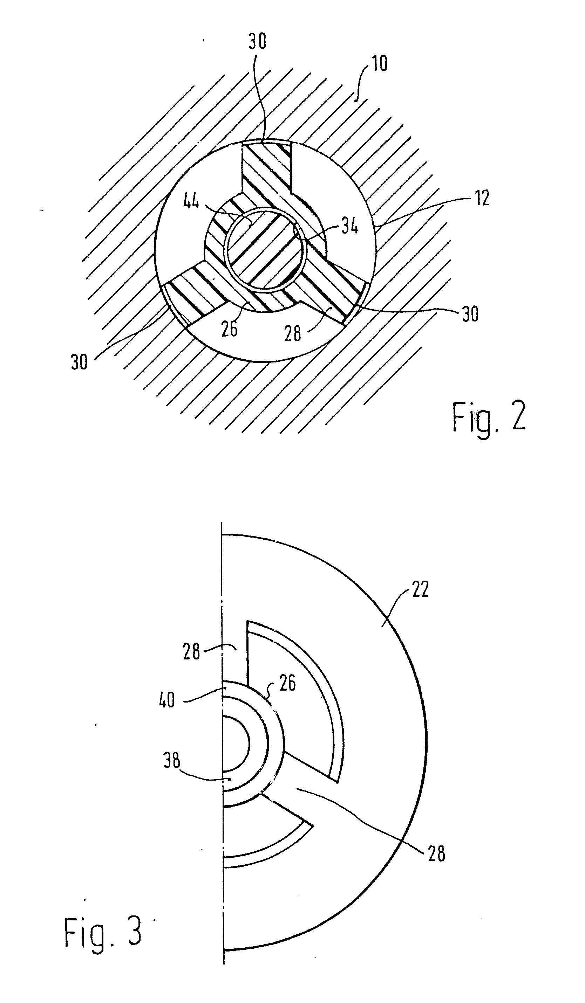

Das Ventil umfaßt weiter einen mit dem Ventilteller 14 beweglich verbundenen, sich durch das Ventilloch 12 hindurch zu der dem Ventilteller 14 abgewandten, rückwärtigen Seite der Trennwand 10 erstreckenden Stößel 20. Dieser weist an seinem dem Ventilteller 14 abgewandten, freien Ende einen kräftigen, umlaufenden, radial vorstehenden Ring 22 auf. Zwischen letzteren und die Rückseite der Trennwand 10 ist eine Schraubendruckfeder 24 eingeschaltet, deren Bemessung den zum Öffnen des Ventils erforderlichen Überdruck bestimmt. Der Stößel 20 umfaßt in einem innerhalb des Ventillochs 12 liegenden Längenabschnitt eine Nabe 26 sowie von dieser radial nach außen ragende, in Umfangsrichtung voneinander beabstandete und sich achsparallel zu dem Ring 22 hin erstreckende Rippen 28, die einstückig mit dem Ring 22 und der Nabe 26 aus einem festen, zähelastischen Kunststoff hergestellt sind. Wie insbesondere aus Figur 2 erkennbar ist, ist die in Umfangsrichtung gemessene Breite der Rippen 28 gering gegenüber der Umfangslänge, um zwischen den Rippen 28 außerhalb der Nabe 26 einen möglichst großen Durchtrittsquerschnitt bei offenem Ventil zu schaffen, und die Außenabmessungen der Rippen 28 sind etwas geringer als der Innendurchmesser des Ventillochs 12, um ein seitliches Ausweichen und eine geringfügige Schrägstellung des Stößels 20 im Ventilloch 12 zu gestatten, wenn der Stößel 20 Schmutzpartikeln ausweichen muß. Aufgrund der genannten Durchmesserunterschiede liegen zwischen den Außenflächen der Rippen 28 und dem Innenumfang des Ventilloches 12 radiale Spalte 30. Auf ihren auch bei geöffnetem Ventil nicht in das Ventilloch 12 eintauchenden, an den Ring 22 anschließenden Längenabschnitten sind die Rippen 28 dagegen zur Erhöhung der mechanischen Festigkeit des Stößels 20 radial verbreitert, wie in Figur 1 anhand der Querschnittsstute 32 erkennbar ist, und haben dort gegenüber dem Innendurchmesser des Ventilloches 12 größere Außenabmessungen.

Die Nabe 26 weist eine zentrale Ausnehmung 34 von kreisförmigem Querschnitt auf, die sich von ihrem dem Ventilteller 14 abgewandten Ende ausgehend konisch erweitert. Weiter trägt der Ventilteller 14 in seiner Mitte eine einstückig mit ihm aus einem unelastischen, festen Kunststoff hergestellte Stange 36, die die Dichtung 16 durchsetzt und sich vom Ventilteller 14 in die Ausnehmung 34 der Nabe 26 hinein bis zu deren dem Ventilteller 14 abgewandtem Ende erstreckt. An ihrem dem Ventilteller 14 abgewandten, freien Ende trägt die Stange 36 einen einstückig an ihr angeformten Kopf 38, der der Verbindung von Ventilteller 14 und Stößel 20 dient. Der Kopf 38 hintergreift die Nabe 26 und liegt mit einer der Nabe 26 zugewandten, kreisringförmigen Anlagefläche 40 an der ebenen, dem Ventilteller 14 abgewandten Stirnseite 42 der Nabe 26 an, solange Ventilteller 14 und Stößel 20 miteinander fluchten. Bei einer möglichen, geringen Schrägstellung des Stößels 20 gegenüber dem Ventilteller 14 liegt nur noch ein Teilbereich der Auflagefläche 40 an der Stirnfläche 42 an, wodurch eine gewisse Richtwirkung erzielt wird.

Die Stange 36 weist einen innerhalb der Nabe 26 liegenden, zylindrischen Abschnitt 44 auf, dessen Durchmesser gleich dem geringsten, am Übergang zur Stirnfläche 42 liegenden Durchmesser der Ausnehmung 34 der Nabe 26 ist. Der zylindrische Abschnitt 44 gestattet einerseits zusammen mit der konischen Erweiterung der Ausnehmung 34 eine geringe Schwenkbewegung des Stößels 20 gegenüber der Achse des Ventiltellers 14, während andererseits eine radiale Verschiebung von Ventilteller 14 und Stößel 20 gegeneinander verhindert wird.

Um eine selbsttätige Zentrierung des Ventiltellers 12 gegenüber dem Ventilsitz 18 bei geschlossenem Ventil zu erzielen, weist der Ventilteller 14 eine dem Ventilsitz 18 axial gegenüberliegende, kreisringförmige Ausnehmung 46 auf, deren Innendurchmesser geringer als der Innendurchmesser des Ventilsitzes 18 und deren Außendurchmesser größer als der Außendurchmesser des Ventilsitzes 18 ist. Die Ausnehmung 46 wird außen von einem Ringwulst 48 begrenzt, dessen axiale Höhe geringer als die Dicke der Dichtung 16 ist, und nach innen hin wird die Ausnehmung 26 von einem weiteren Ringwulst 50 begrenzt, dessen axiale Höhe etwas geringer als diejenige des Ringwulstes 48 ist. Die Dichtung 16 ist zwar, um den Federweg der Schraubendruckfeder 24 und den Öffnungsdruck nicht zu verändern, in axialer Richtung praktisch nicht nachgiebig, besteht jedoch aus einem schmiegsamen Kunststoffmaterial von solcher Elastizität, daß sie unter der Wirkung der von der Schraubendruckfeder 24 ausgeübten Kraft von dem Ventilsitz 18 in die Ausnehmung 46 bis zum Anliegen an deren Grund hineingedrückt werden kann, wenn das Ventil geschlossen ist. Damit ist dann auch der Abstand zwischen dem Grund der Ausnehmung 46 und dem Ventilsitz 18 trotz der Verformung der Dichtung 16 genau bestimmt und gleicht der Dicke der Dichtung 16.

Um das Hineindrücken der Dichtung 16 in die Ausnehmung 46 bei geschlossenem Ventil zu erreichen, ist es günstig, wenn der Ventilsitz 18 eine nur geringe radiale Breite hat. Dadurch könnte jedoch die Gefahr bestehen, daß sich der Ventilsitz 18 unter Verminderung der Dicke der Dichtung 16 in diese hineindrückt. Um dies zu vermeiden und auch, um eine stets gleichmäßig gute Dichtwirkung zu erzielen, hat es sich als vorteilhaft erwiesen, wenn wie beim Ausführungsbeispiel der Ventilsitz 18 ein von der Trennwand 10 zum Ventilteller 14 hin vorstehender, ringförmiger Wulst ist, dessen zum Ventilteller 14 hin liegende Kuppe 52 gerundet ist, dessen radial innere Flanke 54 achsparallel verläuft und dessen radial äußere Flanke 56 zur Trennwand 10 hin unter einem Winkel von annähernd 45° schräg abfällt.

## Ansprüche

1. Ventil mit einem in einer Trennwand (10) vorgesehenen Ventilloch (12), einem auf einer Seite der Trennwand (10) liegenden, das Ventilloch (12) überdeckenden Ventilteller (14), einer am Ventilteller (14) gehaltenen Dichtung (16), die mit einem das Ventilloch umgebenden Ventilsitz (18) zusammenwirkt, einem mit dem Ventilteller (14) beweglich verbundenen, sich durch das Ventilloch (12) hindurch erstreckenden Stößel (20) und einer zwischen die dem Ventilteller (14) abgewandte Seite der Trennwand (10) und einen am freien Ende des Stößels (20) vorgesehenen Ring (22) eingeschalteten Schraubendruckfeder (24), wobei der Stößel (20) in einem innerhalb des Ventillochs (12) liegenden Längenabschnitt eine Nabe (26) sowie von dieser radial nach außen ragende, in Umfangsrichtung voneinander beabstandete und sich achsparallel zu dem Ring (22) hin erstreckende Rippen (28) aufweist, die einstückig mit dem Ring (22) und der Nabe (26) hergestellt sind und innerhalb des Ventillochs (12) gegenüber dessen Innendurchmesser geringere Außenabmessungen aufweisen und wobei zur Rastverbindung von Nabe (26) und Ventilteller (14) einer dieser Teile (26) eine zentrale Ausnehmung (34) von kreisförmigem Querschnitt aufweist und der andere dieser Teile (14) eine sich in die Ausnehmung (34) hinein erstreckende Stange (36), deren innerhalb der Ausnehmung (34) liegender Abschnitt (44) zylindrisch ist, und einen an einem Ende der Stange (36) getragenen, auf seiner zur Stange (36) hin liegenden Seite eine kreisringförmige Anlagefläche (40) aufweisenden Kopf (38) umfaßt, dessen Durchmesser größer ist als derjenige der Ausnehmung (34) in ihrem dem Kopf (38) zugewandten Bereich, dadurch gekennzeichnet, daß der aus einem unelastischen Werkstoff bestehende Ventilteller (14) die Stange (36) trägt, daß die die Nabe (26) durchdringende Ausnehmung (34) einen dem Durchmesser des zylindrischen Abschnitts (44) der Stange (36) gleichen geringsten Durchmesser hat und sich von ihrem dem Ventilteller (24) abgewandten Ende ausgehend zum Ventilteller (14) hin konisch erweitert und daß die dem Ventilteller (14) abgewandte Stirnseite (42) der Nabe (26) zur Anlage an der Anlagefläche (40) des Kopfes (38) eben ausgebildet ist.

2. Ventil nach Anspruch 1, dadurch gekennzeichnet, daß der Ventilteller (14) einstückig mit der Stange (36) und dem Kopf (38) hergestellt ist.

3. Ventil nach Anspruch 1 oder 2, dadurch gekennzeichnet, daß der Stößel (20) aus einem schwach federelastischen Kunststoff besteht.

4. Ventil nach einem der vorangehenden Ansprüche, dadurch gekennzeichnet, daß der Ventilteller (14) eine dem Ventilsitz (18) axial gegenüberliegende, kreisringförmige Ausnehmung (46) aufweist, deren Innendurchmesser geringer als der Innendurchmesser des Ventilsitzes (18) und deren Außendurchmesser größer als der Außendurchmesser des Ventilsitzes (18) ist, und daß die Dichtung axial inkompressibel und so elastisch ausgebildet ist, daß sie unter der Wirkung der von der Schraubendruckfeder (24) ausgeübten Kraft von dem Ventilsitz (18) in die Ausnehmung (46) bis zum Anliegen an deren Grund hineingedrückt wird.

5. Ventil nach einem der vorangehenden Ansprüche, dadurch gekennzeichnet, daß der Ventilsitz (18) ein von der Trennwand (10) zum Ventilteller (14) hin vorstehender, ringförmiger Wulst ist, dessen zum Ventilteller (14) hin liegende Kuppe (52) gerundet ist, dessen radial innere Flanke (54) achsparallel verläuft und dessen radial äußere Flanke (56) zur Trennwand (10) hin schräg abfällt.

## Claims

1. Valve with a valve aperture (12) provided in a dividing wall (10), with a valve disc (14) situated on one side of the dividing wall (10) and covering the valve aperture (12), with a seal (16) held against the valve disc (14), which seal cooperates with a valve seat (18) surrounding the valve aperture, with a tappet (20) movably connected to the valve disc (14) and extending through the valve aperture (12), and with a helical compression spring (24) interposed between that side of the dividing wall (10) remote from the valve disc (14) and a ring (22) provided at the free end of the tappet (20), in which case the tappet (20) has a hub (26) situated inside the valve aperture (12) and also has ribs (28) projecting radially outward from this hub, spaced apart from one another in peripheral direction and extending axially parallel to the ring (22), which ribs are produced in one piece with the ring (22) and with the hub (26) and which inside the valve (12) have smaller external dimensions in relation to the internal diameter thereof, and wherein for the catch connection of hub (26) and valve disc (14) one of these parts (26) has a central recess (34) of circular cross-section and the other of these parts (14) has a stem (36) extending into the recess (34), the portion (44) of which stem lying inside the recess (34) is cylindrical, and comprises a head (38) carried at one end of the stem (36) and having an annular abutment surface (40) situated on its side facing the stem (36), the diameter of which head is greater than that of the recess (34) in its zone nearest the head (38), characterised in that the valve disc (14) consisting of a non-elastic material carries the stem (36), in that the recess (34) passing through the hub (26) has a minimum equal to the diameter of the cylindrical portion (44) of the stem (36) and starting from its end remote from the valve disc (14) widens conically towards the valve disc (14), and in that the end face (42) of the hub (26) remote from the valve disc (14) is planar for application against the abutment surface (40) of the head (38).

2. Valve according to claim 1, characterised in that the valve disc (14) is produced in one piece with the stem (36) and with the head (38).

3. Valve according to claim 1 or claim 2, characterised in that the tappet (20) consists of a weakly spring-elastic plastics material.

4. Valve according to one of the preceding claims, characterised in that the valve disc (14) has an annular recess (46) lying axially opposite the valve seat (18), the internal diameter of which recess is smaller than the internal diameter of the valve seat (18) and the external diameter of which recess is greater than the external diameter of the valve seat (18), and in that the seal is axially incompressible and is designed to be so elastic that under the action of the force exerted by the helical compression spring (24) it is pushed by the valve seat (18) into the recess (46) until abutting against the bottom thereof.

5. Valve according to one of the preceding claims, characterised in that the valve seat (18) is an annular protuberance projecting from the dividing wall (10) towards the valve disc (14), the peak (52) of which protuberance is rounded towards the valve disc (14) and the radially inner flank (54) of which protuberance extends axially parallel and the radially outer flank (56) of which protuberance slopes obliquely towards the dividing wall (10).

## Revendications

1. Soupage présentant un orifice (12) de soupape dans une paroi de séparation (10), un plateau (14) de soupape situé d'un côté de la paroi de séparation (10) et recouvrant l'orifice de soupape (12), un joint (16) associé au plateau (14) de soupape qui coopère avec un siège (18) de soupape entourant l'orifice, un poussoir (20) s'étendant au travers de l'orifice (12) de soupape et relié de manière mobile au plateau (14), et un ressort hélicoïdal (24) de pression monté entre la face de la paroi de séparation (10) éloignée du plateau (14) et un anneau (22) prévu à l'extrémité libre du poussoir (20), ce dernier présentant un moyeu (26) dans une partie longitudinale se trouvant dans l'orifice de soupape, ainsi que des nervures (28) faisant saillie radialement vers l'extérieur à partir du moyeu, espacées les unes des autres dans le sens périphérique et s'étendant parallèlement à l'axe de l'anneau (22), nervures qui sont réalisées en une seule pièce avec l'anneau (22) et le moyeu (26) et qui présentent des dimensions extérieures plus petites que le diamètre intérieur de l'orifice (12) de soupape à l'intérieur de ce dernier, un évidement central (34) de section circulaire étant ménagé, pour la liaison par encliquetage du moyeu (26) et du plateau (14) de soupape, dans une de ces pièces, l'autre de ces pièces comprenant une tige (36) s'étendant dans l'évidement (34) et dont la partie (44) située à l'intérieur de l'évidement (34) est cylindrique, ainsi qu'une tête (38) portée par une extrémité de la tige (36) et présentant une surface d'appui (40) de forme circulaire sur son côté dirigé vers la tige (36) tête dont le diamètre est plus grand que celui de l'évidement (34) dans sa partie proche de la tête (38) caractérisée en ce que le plateau (14) de soupape formé dans un matériau non élastique porte la tige (36), en ce que l'évidement (34) traversant le moyeu (26) a un faible diamètre égal au diamètre de la partie cylindrique (44) de la tige (36) et qu'il s'élargit coniquement à partir de son extrémité éloignée du plateau (14) de soupape dans la direction dudit plateau, et en ce que la face frontale (42) du moyeu (26) éloignée du plateau (14) est réalisée plane pour l'appui sur la surface d'appui (40) de la tête (38).

2. Soupape selon la revendication 1, caractérisée en ce que le plateau (14) de la soupape, la tige (36) et la tête (38) sont monobloc.

3. Soupape selon la revendication 1 ou la revendication 2, caractérisée en ce que le poussoir (20) est en une matière plastique faiblement élastique.

4. Soupape selon l'une quelconque des revendications précédentes, caractérisée en ce que le plateau (14) présente un évidement (46) en forme d'anneau circulaire, faisant face axialement au siège (18) et dont le diamètre interne est plus faible que le diamètre interne du siège (18), son diamètre externe étant plus grand que le diamètre externe du siège (18), et en ce que le joint est incompressible axialement et qu'il est élastique d'une telle manière qu'il est appliqué par le siège (18) dans l'évidement (46) jusqu'à reposer sur son fond sous l'action de la force exercée par le ressort hélicoïdal de pression (24).

5. Soupape selon l'une quelconque des revendications précédentes, caractérisée en ce que le siège (18) est une lèvre de forme annulaire faisant saillie de la paroi de séparation (10) vers le plateau (14), dont le sommet (52) dirigé vers le plateau (14) est arrondi, dont le flanc radial interne (54) est parallèle à l'axe et dont le flanc externe radial (56) est incliné vers la paroi de séparation (10).

Fig. 1

Fig. 2

Fig. 3